# EUROPÄISCHE PATENTANMELDUNG

(11) **EP 2 048 431 A1**
(43) Veröffentlichungstag der Anmeldung: **15.04.2009**
(21) Anmeldenummer: 08450150.1
(22) Anmeldetag: 06.10.2008
(51) Int. Cl.: F21S 9/03, F21V 23/00, H02J 7/35, H05B 37/02, G05F 1/67, H01L 31/042, H05B 33/08, H05B 39/04, H05B 41/38, F21Y 101/02

(54) **Solarleuchte mit Dimmer**

(30) Priorität: 08.10.2007 AT 15922007
(71) Anmelder: Hierzer, Andreas, 8010 Graz (AT)
(72) Erfinder: Hierzer, Andreas, 8010 Graz (AT)
(74) Vertreter: Margotti, Herwig Franz

(57) **Zusammenfassung**

Eine Solarleuchte (1) umfasst zumindest ein Leuchtmittel (2), vorzugsweise zumindest eine Leuchtdiode, zumindest einen elektrischen Energiespeicher (4), insbesondere einen wiederaufladbaren elektrischen Akkumulator, der über einen Stromkreis (3) mit dem Leuchtmittel (2) verbunden ist, und zumindest ein Fotovoltaik-Element (5), das mit dem elektrischen Energiespeicher (4) verbunden ist. In dem Stromkreis (3) zwischen dem Leuchtmittel (2) und dem elektrischen Energiespeicher (4) ist ein Dimmer (9) geschaltet, der von einem Regler (8) in Abhängigkeit vom Ladezustand des Energiespeichers (4) regelbar ist.

## Beschreibung

Die Erfindung betrifft eine Solarleuchte gemäß dem Oberbegriff des Anspruchs 1.

Bisher am Markt befindliche sogenannte Solarleuchten, das sind durch Sonnenenergie versorgte Leuchten, weisen ein Leuchtmittel auf, z.B. eine oder mehrere Leuchtdioden umfassend, das aus einem elektrischen Energiespeicher gespeist wird. Der elektrische Energiespeicher wiederum wird durch Fotovoltaik-Zellen aufgeladen. Ein Schalter öffnet und schließt den Stromkreis zwischen Leuchtmittel und Energiespeicher. Der Schalter kann händisch und/oder durch einen Helligkeitssensor und/oder durch eine Zeitschaltuhr betätigt werden.

Nachteilig an den bisherigen, durch eine Zeitschaltuhr gesteuerten Solarleuchten ist jedoch, dass die Zeitschaltuhr unabhängig vom Ladezustand des elektrischen Energiespeichers arbeitet, d.h. wenn beispielsweise eine Leuchtdauer auf 5 Stunden eingestellt ist, bleibt der Schalter für diese Zeitdauer geschlossen, auch wenn möglicherweise der elektrische Energiespeicher bereits früher erschöpft ist. Dabei ist insbesondere zu bedenken, dass die Fotovoltaik-Zellen im Winter typischerweise über einen Tag nur 20% der elektrischen Energie an den elektrischen Energiespeicher senden können, die sie im Sommer an einem Sonnentag liefern könnten. Es treten also zwangsläufig gravierende saisonale Unterschiede des Ladezustands des elektrischen Energiespeichers bei einer Solarleuchte auf. Weitere Schwankungen des Ladezustands des elektrischen Energiespeichers einer Solarleuchte sind durch Wetterveränderungen (Sonne, Wolken) über den Tagesverlauf bedingt.

Aus den beschriebenen zwangsläufigen Schwankungen beim Aufladen des elektrischen Energiespeichers einer Solarleuchte ergibt sich für den Benutzer der höchst unbefriedigende Zustand, dass er nicht sicher sein kann, ob die Solarleuchte tatsächlich für die vorhergesehene Zeitdauer leuchtet, was Sicherheitsprobleme mit sich bringt, indem beispielsweise ein Weg zu einem Haus nicht ausreichend lange beleuchtet wird. Abgesehen davon leiden auch die elektrischen Energiespeicher durch übermäßige Entladungen.

Der vorliegenden Erfindung liegt die Aufgabe zugrunde, eine Solarleuchte bereitzustellen, die die Nachteile des Standes der Technik überwindet oder zumindest mildert.

Diese Aufgabe wird durch eine Solarleuchte mit den kennzeichnenden Merkmalen des Anspruchs 1 gelöst.

Erfindungsgemäß ist dabei vorgesehen, dass in dem Stromkreis zwischen dem Leuchtmittel und dem elektrischen Energiespeicher ein Dimmer angeordnet ist, dessen Dimmgrad von einem Regler in Abhängigkeit vom Ladezustand des Energiespeichers regelbar ist. Der Dimmgrad ist als das Verhältnis der tatsächlichen Bereitstellung elektrischer Leistung durch den Dimmer zum maximal bereitstellbaren elektrischen Leistung definiert und kann z.B. als Prozentwert angegeben werden.

Dadurch ist es möglich, die Betriebsparameter der Solarleuchte gezielt zu steuern und die gewünschten Werte wie beispielsweise Leuchtdauer, Mindesthelligkeit, Einschaltzeitpunkte etc. gemäß den vom Benutzer gewählten Vorgaben einzustellen.

Bevorzugt kann der Regler als Mikroprozessor bzw. Microcontroller ausgeführt sein, was durch die weite Verbreitung und die kostengünstige Herstellbarkeit der Mikroprozessortechnik eine einfache und kostengünstige Herstellung der Solarleuchten ermöglicht.

Als Messgröße für den Ladezustand von Akkumulatoren wird im Allgemeinen die Akkuspannung herangezogen, da diese einfach zu bestimmen ist. Die Akkuspannung gibt jedoch nur sehr unzuverlässig Auskunft über den tatsächlichen Ladezustand des Akkus, da die Akkuspannung ebenso vom Alter und der Temperatur des Akkus und von den fließenden Strömen (Laden bzw. Entladen) beeinflusst wird. In einer bevorzugten Variante der erfindungsgemäßen Solarleuchte ist daher der Ladezustandsmesser so ausgebildet, dass er den Ladezustand des Energiespeichers aus der dem Energiespeicher zugeführten elektrischen Energie errechnet, die er aus Strom- und Spannungsmessungen über die Zeit an dem zumindest einen Fotovoltaikelement ermittelt. Diese Methode der Bestimmung des Ladezustands ist wesentlich genauer und zuverlässiger als die Bestimmung über die Akkuspannung.

In einer Fortbildung der erfindungsgemäßen Solarleuchte regelt der Regler den Dimmgrad des Dimmers in Abhängigkeit von einer voreinstellbaren oder anhand der Zeitpunkte von Sonnenaufgang und Sonnenuntergang ermittelten Soll-Leuchtdauer und teilt somit die gemäß dem Ladezustand des Energiespeichers vorhandene elektrische Energie so ein, dass das Leuchtmittel über die gesamte Soll-Leuchtdauer betrieben werden kann.

Damit große Helligkeitsschwankungen der Solarleuchte in aufeinanderfolgenden Nächten vermieden wird, ist vorgesehen, dass der Regler die angewandten Dimmgrade des Dimmers aus vorangegangenen Nächten speichert und bei der Berechnung des Dimmgrades für die jeweils aktuelle Nacht berücksichtigt.

Weiterhin kann vorgesehen werden, dass der Dimmer durch den Regler adaptiv in Abhängigkeit von einer Soll-Restleuchtdauer regelbar ist, so dass auch bei unvorhergesehen starken Änderungen des Ladezustands des Energiespeichers die Leuchte über die gesamte Soll-Leuchtzeit eingeschaltet bleiben kann.

Um die begrenzt zur Verfügung stehende, tagsüber gewonnene Energie besser nutzen zu können, kann über einen benutzereinstellbaren Leuchtpausenregler eine Leuchtpause in der Nacht definiert werden. Der Regler subtrahiert die Leuchtpausendauer von der Soll-Leuchtdauer und ermittelt anhand dieser Differenz den Dimmgrad, auf welchen der Dimmer geregelt wird. Dadurch wird für die solcherart verkürzte Leuchtdauer mehr Energie zur Verfügung gestellt.

Damit mehrere erfindungsgemäße Solarleuchten synchron betrieben werden können, was die Leuchtpause anlangt, ist gemäß der Erfindung zumindest eine "Master"-Solarleuchte vorgesehen, die einen Sender aufweist, der Information über die Leuchtpausendauer an andere Solarleuchten sendet. Diese anderen Solarleuchten dienen als "Slave"-Leuchten und besitzen einen Empfänger zum Empfangen von Information über die Leuchtpausendauer. Durch diese Maßnahme muss nicht jede Solarleuchte mit einem Leuchtpausenregler versehen werden und der Benutzer muss nicht von Leuchte zu Leuchte gehen, um die Einstellung der Leuchtpause vorzunehmen, sondern kann dies zentral an einer Solarleuchte tun.

In einer bevorzugten Ausgestaltung der erfindungsgemäßen Solarleuchte umfasst der Regler eine Verschattungskontrolle, die tagsüber ein Einschalten des Leuchtmittels verhindert. Dadurch wird ungewollte Inbetriebnahme bei künstlicher Verschattung durch Bäume, Autos oder andere Objekte unterbunden.

Die erfindungsgemäße Ausgestaltung weist auch eine Ladestromregelung auf, die eine optimale Ladung des Energiespeichers bewirkt. Diese Ladestromregelung ist zwischen dem elektrischen Energiespeicher und dem Fotovoltaikelement angeordnet und stellt den Ladestrom so ein, dass die vom Fotovoltaikelement gelieferte Leistung maximal ist. Das heißt, dass das Fotovoltaikelement in Leistungsanpassung betrieben wird.

Um den Bauteilaufwand gering zu halten und insbesondere um auf einen separaten Helligkeitssensor verzichten zu können, errechnet in einer Fortbildung der Erfindung der Regler aktuelle Umgebungshelligkeitswerte aus den vom Fotovoltaikelement gelieferten elektrischen Strömen und Spannungen.

Die Erfindung wird im Folgenden anhand von Ausführungsbeispielen unter Bezugnahme auf die Zeichnungen näher erläutert.

Fig. 1 zeigt eine schematisierte Schaltung einer erfindungsgemäßen Solarleuchte, die als "Master"-Leuchte ausgebildet ist.

Fig. 2 zeigt eine schematisierte Schaltung einer erfindungsgemäßen Solarleuchte, die als "Slave"-Leuchte ausgebildet ist.

Fig. 3 zeigt ein Flussdiagramm der Steuerung der erfindungsgemäßen Solarleuchte.

Fig. 4 zeigt ein Zeitdiagramm des nächtlichen Betriebs der erfindungsgemäßen Solarleuchte mit Leuchtpausen.

Fig. 5 zeigt eine Strom/Spannungs-Kennlinie eines in der erfindungsgemäßen Solarleuchte verwendeten Fotovoltaikelements.

Fig. 6 zeigt ein Flussdiagramm der intelligenten Ladestromregelung der erfindungsgemäßen Solarleuchte.

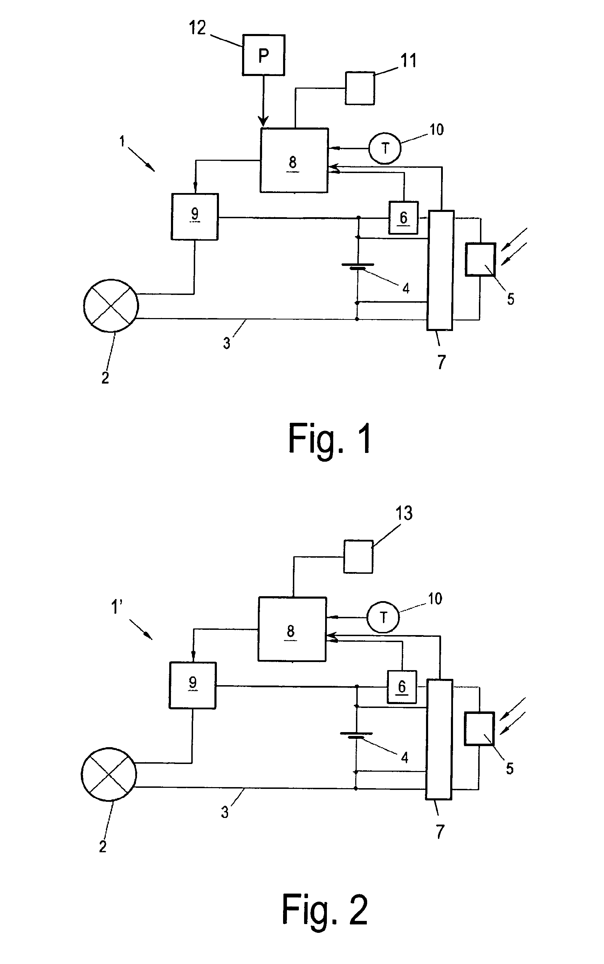

Die in Fig. 1 dargestellte erfindungsgemäße Solarleuchte 1 umfasst ein Leuchtmittel 2, welches beispielsweise in Form zumindest einer Leuchtdiode ausgebildet ist. Das zumindest eine Leuchtmittel 2 ist über einen Stromkreis 3 mit zumindest einem Energiespeicher 4 verbunden. Der Energiespeicher 4 ist dabei als wiederaufladbarer Akkumulator ausgebildet.

Zum Laden des zumindest einen Energiespeichers 4 ist in dem Stromkreis 3 zumindest ein Fotovoltaikelement 5 vorgesehen, durch welches eine direkte Umwandlung der bei Sonnenschein bzw. Licht einfallenden Strahlungsenergie in elektrische Energie erfolgt. Die so erhaltene Energie wird in dem Energiespeicher 4 gespeichert, bis sie zum Betrieb des zumindest einen Leuchtmittels 2 benötigt wird. Zur Kontrolle bzw. Steuerung des Ladestroms zwischen dem Fotovoltaikelement 5 und dem Energiespeicher 4 ist eine Ladesteuerung 6 vorgesehen.

Weiteres fungiert das Fotovoltaikelement 5 gleichzeitig als Helligkeitssensor, indem die von ihm gelieferten, helligkeitsabhängigen Spannungen und Ströme zur Ermittlung von Umgebungshelligkeiten herangezogen werden. Die ermittelte Umgebungshelligkeit wird zum Einschalten der Solarleuchte 1 unterhalb einer bestimmbaren Helligkeitsschwelle bzw. zum Ausschalten oberhalb des Schwellenwertes herangezogen.

Der Ladungszustand des Energiespeichers 4 kann über einen Ladezustandsmesser 7 des elektrischen Energiespeichers 4 kontrolliert werden. Der Ladezustandsmesser 7 sowie die Ladesteuerung 6 empfangen Steuersignale von bzw. liefern ihre Signale an einen Regler 8. Der Regler 8 ist dabei vorzugsweise in Form eines Mikroprozessors ausgeführt.

Die Zeitreferenz T, die für diverse Berechnungen des Reglers 8 benötigt wird, wird von einem Timer 10 generiert, der als externe Uhr ausgeführt sein kann, oder der in Form eines digitalen Zählers als ein Programm implementiert ist, das im als Mikrocontroller ausgebildeten Regler 8 abläuft.

In einer simplen Form kann der Ladezustandsmesser 7 die Akkuspannung des Energiespeichers 4 heranziehen, da diese einfach zu bestimmen ist. Die Akkuspannung gibt jedoch nur sehr unzuverlässig Auskunft über den tatsächlichen Ladezustand des Energiespeichers 4, da sie ebenso vom Alter und der Temperatur des Energiespeichers 4 und von den fließenden Strömen (Laden bzw. Entladen) beeinflusst wird. Es ist deshalb bevorzugt, anstelle der Akkuspannung die Energie, die im Energiespeicher 4 gespeichert wurde, als Regelgröße heranzuziehen. Dazu misst der Ladezustandsmesser 7 an den Fotovoltaikelementen 5 die Ströme und Spannungen über die Zeit, woraus die gelieferte Energie berechnet wird, die bis auf die vernachlässigbaren Verlustleistungen der elektronischen Bauteile der Solarleuchte 1 in den Energiespeicher 4 übertragen werden kann. Die erhaltenen Daten werden im Regler 8 gespeichert.

Der Regler 8 errechnet anhand des Ladezustands des Energiespeichers 4 und weiterer, nachfolgend beschriebener Eingangsgrößen einen Dimmgrad und steuert einen im Stromkreis 3 befindlichen Dimmer 9 gemäß dem errechneten Dimmgrad. Durch Steuerung des Dimmgrads lässt sich der Energieverbrauch der Solarleuchte 1 regeln.

Um große Helligkeitsschwankungen der Leuchte an aufeinanderfolgenden Tagen zu vermeiden bezieht der Regler 8 den Dimmgrad der Vomächte in die Berechnung des Dimmgrads für die jeweils aktuelle Nacht mit ein.

Um die begrenzt zur Verfügung stehende tagsüber gewonnene Energie besser nutzen zu können, ist ein Leuchtpausenregler 12 vorgesehen, mit dem ein Benutzer eine Leuchtpause für die Nacht einstellen kann, deren Dauer P an den Regler 8 übermittelt wird. Der Regler 8 subtrahiert die Leuchtpausendauer von der Soll-Leuchtdauer und ermittelt anhand der Differenz den Dimmgrad, auf den er den Dimmer 9 regelt. Dadurch wird für die verbleibende Leuchtdauer mehr Energie zur Verfügung gestellt.

Die Solarleuchte 1 ist als "Master"-Solarleuchte ausgebildet, die einen Sender 11 aufweist, der Information über die Leuchtpausendauer P mittels drahtloser Kommunikation an die in Fig. 2 dargestellte "Slave"-Solarleuchte 1' sendet. Die "Slave"-Solarleuchte 1' unterscheidet sich von der "Master"-Solarleuchte 1 insofern, als sie keinen Leuchtpausenregler 12 besitzt, sondern die Leuchtpausendauer P über einen Empfänger 13 von der "Master"-Solarleuchte 1 bezieht. Wenn beispielsweise mehrere Solarleuchten 1, 1' an einem Weg aufgestellt sind, müsste man ohne dieses Master/Slave-Prinzip bei jeder Leuchte extra die Leuchtpausendauer P einstellen.

Es folgt nun eine Funktionsbeschreibung der erfindungsgemäßen Solarleuchte 1.

Sonnenenergie wird über die Fotovoltaikelemente 5 aufgenommen und über den Laderegler 6 in dem Energiespeicher 4 (Akku) gespeichert. Den Nachtbeginn ermittelt der Regler 8 mithilfe des Fotovoltaikelements 5, welches somit auch als Helligkeitssensor fungiert. Um etwaige ungewollte Leuchtperioden am Tag zu verhindern (zum Beispiel ein Gewitter verdunkelt die Sonne) ist eine Verschattungskontrolle in der Logik des Reglers 8 der Solarleuchte 1 vorgesehen, die nach folgendem Prinzip arbeitet: Wenn ein Objekt die Solarleuchte 1 beschattet sinkt der Ladestrom des Fotovoltaikelements 5 rapide auf einen sehr kleinen Wert ab, die Spannung an den Fotovoltaikelementen 5 sinkt jedoch nur geringfügig ab; dies ist eine charakteristische Eigenschaft der Fotovoltaikelemente. Sinkt die Spannung an den Fotovoltaikelementen 5 unter einen definierten Schwellenwert, so beginnt die Solarleuchte zu leuchten, wenn die aktuell gemessene Tagesdauer den archivierten Tagesdauern der letzten Tage entspricht. Ist die gemessene Tagesdauer jedoch wesentlich kürzer, was nur bei künstlicher Verschattung der Fall sein kann, so erkannt dies der Regler und steuert den Dimmer 9 nicht an. Die Solarleuchte 1 leuchtet daher nicht.

Der Regler 8 speichert immer in einem gewissen Zeitintervall die Werte für Spannung und Strom, die am Fotovoltaikelement gemessen werden. So lässt sich über den gesamten Tag die aufgenommene Energie über Strom, Spannung und Zeit ermitteln. Wenn zum Beispiel 20 Wh aufgenommen worden sind, hat der Energiespeicher 4 die Möglichkeit diese Energie unter Berücksichtigung des Systemwirkungsgrades zu liefern, ohne dass die Gefahr einer Tiefentladung besteht. Dies ist eine Eingangsgröße, die den Dimmgrad und somit die Ansteuerung der Leuchtmittel 2 wesentlich beeinflusst.

Um in wenig frequentierten Nachtstunden Energie zu sparen schaltet der Regler 8 die Leuchtmittel 2 für eine vom Benutzer wählbare Leuchtpausendauer P ab. Der Vorteil dieser Ansteuerung ist, dass in den Leuchtpausen Energie eingespart wird, die somit für die verbleibenden Leuchtphasen zur Verfügung steht. Die Leuchtpausendauer P ist somit eine weitere Eingangsgröße für die Berechnung des Dimmgrads. Aus der Differenz zwischen Nachtdauer (= Soll-Leuchtdauer) und Leuchtpause ergibt sich die tatsächliche Leuchtdauer, eine weitere wesentliche Eingangsgröße für die Berechnung des Dimmgrads.

Die von den Fotovoltaikelementen 5 produzierte elektrische Energie an einem bewölkten Tag kann beispielsweise nur ein Zwanzigstel der Energie eines wolkenlosen Tages betragen. Würde der Regler 8 den Dimmgrad für die tatsächliche Leuchtdauer während der Nacht nur aus dem Energieertrag des laufenden Tages bestimmen, so würde der Unterschied der Helligkeit der Leuchte an aufeinanderfolgenden Tagen sehr groß sein, wenn zum Beispiel auf mehrere wolkenlose Tage ein stark bewölkter Tag folgt. Um solche Helligkeitsschwankungen der Solarleuchte 1 zu vermeiden, berücksichtigt der Regler 8 zum Einen die angewandten Dimmgrade der Vortage und zum Anderen den Ladezustand SOC des Energiespeichers 4. Folgt beispielsweise ein bewölkter Tag mehreren wolkenlosen Tagen, so ist der vom Regler 8 tatsächlich gewählte Dimmgrad höher als jener Dimmgrad, welcher sich ausschließlich aus dem Ertrag dieses bewölkten Tages errechnen würde. Es wird zusätzliche Energie aus dem Energiespeicher 4 verwendet um den Dimmgrad den Vortagen anzupassen. Folgt aber ein wolkenloser Tag mehreren bewölkten Tagen, so wählt der Regler 8 den Dimmgrad niedriger, als er sich bei ausschließlicher Berechnung aus dem Energieertrag des laufenden Tages errechnen würde. Die somit eingesparte Energie wird dadurch für weitere potenzielle Schlechtwettertage zur Verfügung gestellt. Einerseits wird durch diese Steuerung realisiert, dass die intelligente Solarleuchte immer genügend Energie besitzt um die gewünschte Leuchtdauer und Helligkeit zu erreichen. Andererseits werden dadurch große Helligkeitsschwankungen der Leuchte an aufeinanderfolgenden Tagen vermieden.

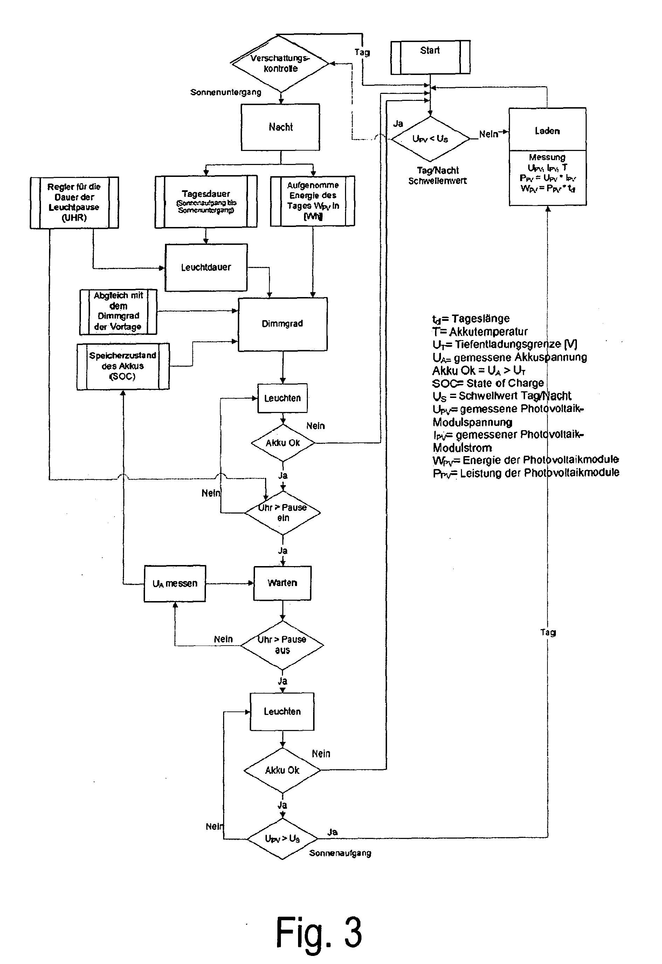

Das Flussdiagramm von Fig. 3 erklärt Details der oben beschriebenen Funktionen der Solarleuchte 1. Die Steuerung der Solarleuchte 1 ist als Endlos-Programmschleife ausgebildet.

Über den einfachen Vergleich zwischen der momentan anliegenden Spannung an den Fotovoltaikelementen 5 und einem Schwellenwert (Tag/Nacht Grenze) wird geregelt, ob die Leuchte ein- bzw. ausgeschaltet wird. Ist die momentan anliegende Spannung höher als dieser Schwellenwert (Sonne scheint also noch) wird die Energie in den Energiespeicher 4 (Akku) gespeichert. Unterschreitet die momentan anliegende Spannung an den Fotovoltaikelementen 5 diesen Wert, so wird zuerst die Verschattungskontrolle durchgeführt.

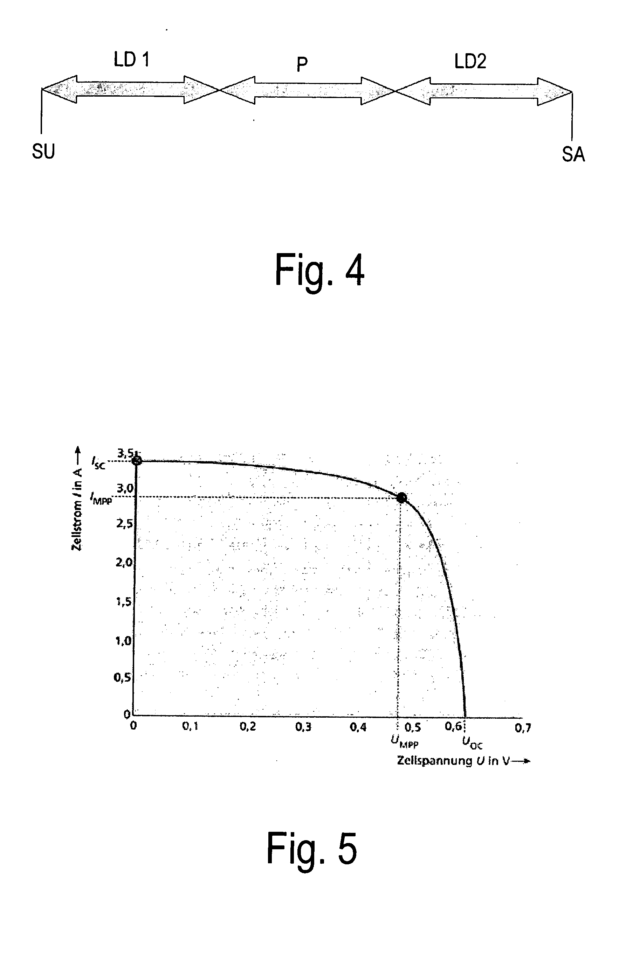

Wenn die Verschattungskontrolle erkannt hat, dass es Nacht ist, wird der Energieertrag und die Tagesdauer des gesamten aufgezeichneten Tages vom Regler 8 in einer Tabelle gespeichert, und es wird der Dimmgrad abhängig von den fünf Faktoren Energieertrag des Tages, Tagesdauer, Leuchtpausendauer, Ladezustand (SOC), und Abgleich mit dem Dimmgrad des Vortages bestimmt. Aus dem gespeicherten Wert des Energieertrages des aktuellen Tages ergibt sich die Energie, die in der Nacht verbraucht werden kann, wie anhand des Zeitdiagramms von Fig. 4 zu sehen. Der Zeitpunkt des Beginns der 1. Leuchtphase LD1 ist klar definiert, nämlich der Sonnenuntergang SU und das Ende der 2. Leuchtphase LD2 ebenso (Sonnenaufgang SA). Die Leuchtpause P zwischen den beiden Leuchtphasen LD1, LD2 wird extern mit dem Leuchtpausenregler 12 eingestellt. Aus der Differenz zwischen der Nachtdauer und Leuchtpause P ergibt sich die Leuchtdauer der beiden Leuchtphasen LD1, LD2. Das Verhältnis von zu verbrauchender Energie und der gesamten Leuchtdauer ergibt den zulässigen Dimmgrad.

Um sicherzustellen, dass die Leuchte mit ungefähr derselben Helligkeit leuchtet wie in der Vomacht, wird ein Abgleich mit dem Dimmgrad des Vortages gemacht. Weiters wird der SOC der Vomacht berücksichtigt, um den Akku als grobe Abschätzung vor Tiefentladungen zu schützen. Nun leuchten die Leuchtmittel 2 (LEDs) bis zur Leuchtpause P, während dieses Zustandes wird kontinuierlich der Akku 4 auf die zulässige untere Spannungsuntergrenze überprüft. In der Leuchtpause P werden die Leuchtmittel ausgeschaltet. Da nun weder Energie zu- noch abgeführt wird, ist der geeignete Zeitpunkt um den Ladezustand SOC mittels einer über Transistor angelegten Last zu messen (in den Ladezustandsmesser 7 integriert), da der Ladezustand eines Akkus nur dann über die Akkuspannung gemessen werden kann, wenn eine definierte Last anliegt. Aber auch wenn die Leuchtmittel später wieder eingeschaltet werden, wird der Zustand des Akkus wieder kontinuierlich überprüft. Wenn die momentan anliegende Spannung an den Fotovoltaikelementen 5 wieder über den Schwellenwert steigt (Sonnenaufgang) werden die Leuchtmittel 2 abgeschaltet und die Fotovoltaikelemente 5 beginnen wieder den Akku 4 erneut zu laden.

Die elektrischen Eigenschaften eines Fotovoltaikelements 5 Solarzelle können mit der in Fig. 5 dargestellten Strom-Spannungskennlinie beschrieben werden. Diese Kennlinie ist einer Diodenkennlinie sehr ähnlich. Aus dem Diagramm ist ersichtlich, dass nur für ein diskretes Strom-/Spannungswertepaar die Rechteckfläche und somit die Leistung des Fotovoltaikelements 5 einen Maximalwert erreicht. Der Laderegler 6 der Solarleuchte 1 wählt den Strom I, der am Fotovoltaikelement 5 abgenommen wird, jeweils so, dass die Leistung des Fotovoltaikelementes 5 maximal ist.

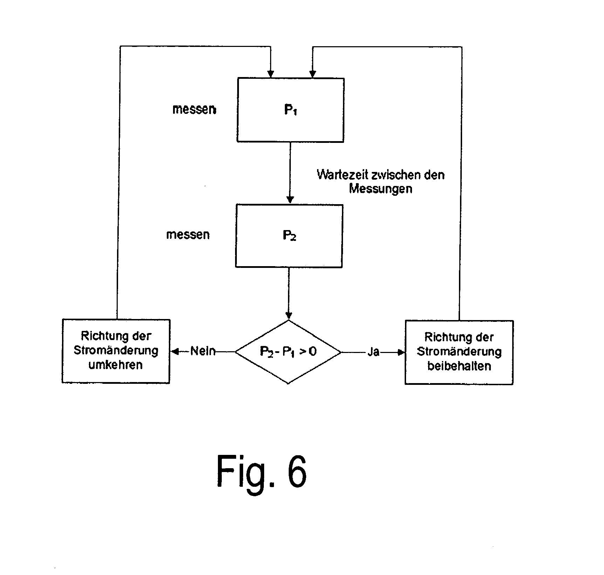

Das Flussdiagramm von Fig. 6 beschreibt diese Ladesteuerung, die als Endlosschleife ausgeführt ist: Man steigt bei einem beliebigen Zeitpunkt ein, wobei der vom Fotovoltaikelement 5 fließende Ladestrom durch den Laderegler 6 permanent über einen Zeitverlauf vergrößert oder verkleinert wird. In zeitlichem Abstand zueinander werden die Leistungen P₁ und P₂ gemessen und die Differenz vom Laderegler ermittelt. Ist die Differenz positiv, d.h. die Leistung P₂ größer als die Leistung P₁, so wird die Richtung der Stromänderung beibehalten, um sich dem Punkt der maximalen Leistung weiter zu nähern. Ist die Differenz der gemessenen Leistung (P₂-P₁) negativ, so wird die Richtung der Stromänderung umgekehrt, um sich aus der anderen Richtung der Kennlinie wieder dem Punkt der maximalen Leistung zu nähern.

Weiteres wandelt der Laderegler 6 der Solarleuchte die an den Fotovoltaikelementen 5 generierte Spannung mittels Gleichstrom-Wandler (DC/DC) in die zum Laden des Energiespeichers 4 benötigte Spannung um.

## Patentansprüche

1. Solarleuchte (1) mit zumindest einem Leuchtmittel (2), vorzugsweise zumindest einer Leuchtdiode, zumindest einem elektrischen Energiespeicher (4), insbesondere einem wiederaufladbaren elektrischen Akkumulator, der über einen Stromkreis (3) mit dem zumindest einen Leuchtmittel (2) verbunden ist, und zumindest einem Fotovoltaikelement (5), das mit dem elektrischen Energiespeicher (4) verbunden ist, **gekennzeichnet durch** einen in den Stromkreis (3) zwischen dem zumindest einen Leuchtmittel (2) und dem elektrischen Energiespeicher (4) geschalteten Dimmer (9), dessen Dimmgrad von einem Regler (8) in Abhängigkeit vom Ladezustand des Energiespeichers (4) regelbar ist, wobei der Regler (8) vorzugsweise als Mikroprozessor bzw. Microcontroller ausgeführt ist.

2. Solarleuchte nach Anspruch 1, **gekennzeichnet durch** einen mit dem Regler (8) kommunizierenden Ladezustandsmesser (7) des elektrischen Energiespeichers (4).

3. Solarleuchte nach Anspruch 2, **dadurch gekennzeichnet, dass** der Ladezustandsmesser (7) den Ladezustand des Energiespeichers (4) aus der dem Energiespeicher (4) zugeführten elektrischen Energie errechnet, die er aus Strom- und Spannungsmessungen über die Zeit an dem zumindest einen Fotovoltaikelement (5) ermittelt.

4. Solarleuchte nach einem der vorhergehenden Ansprüche, **dadurch gekennzeichnet, dass** der Regler (8) den Dimmgrad des Dimmers (9) in Abhängigkeit von einer voreinstellbaren oder anhand der Zeitpunkte von Sonnenaufgang und Sonnenuntergang ermittelten Soll-Leuchtdauer regelt.

5. Solarleuchte nach einem der vorhergehenden Ansprüche, **dadurch gekennzeichnet, dass** der Regler (8) die angewandten Dimmgrade des Dimmers (9) aus vorangegangenen Nächten speichert und bei der Berechnung des Dimmgrades für die jeweils aktuelle Nacht berücksichtigt.

6. Solarleuchte nach einem der vorhergehenden Ansprüche, **dadurch gekennzeichnet, dass** der Dimmer (9) durch den Regler (8) adaptiv in Abhängigkeit von einer Soll-Restleuchtdauer regelbar ist.

7. Solarleuchte nach einem der vorhergehenden Ansprüche, **gekennzeichnet durch** einen benutzereinstellbaren Leuchtpausenregler (12), wobei der Regler (8) die Leuchtpausendauer (P) von der Soll-Leuchtdauer subtrahiert und anhand der Differenz den Dimmgrad ermittelt, auf den der Dimmer (9) geregelt wird.

8. Solarleuchte nach Anspruch 7, **gekennzeichnet durch** einen Sender, der Information über die Leuchtpausendauer (P) an andere Solarleuchten sendet.

9. Solarleuchte nach Anspruch 8, **gekennzeichnet durch** einen Empfänger zum Empfangen von Information über die Leuchtpausendauer (P).

10. Solarleuchte nach einem der vorhergehenden Ansprüche, **dadurch gekennzeichnet, dass** der Regler (8) eine Verschattungskontrolle aufweist, die tagsüber ein Einschalten des Leuchtmittels (2) verhindert.

11. Solarleuchte nach einem der vorhergehenden Ansprüche, **gekennzeichnet durch** eine vom Regler (8) geregelte Ladestromregelung (6), die zwischen dem elektrischen Energiespeicher (4) und dem Fotovoltaikelement (5) angeordnet ist, wobei die Ladestromregelung (6) den Ladestrom (I) so einstellt, dass die Leistung des Fotovoltaikelements (5) maximal ist.

12. Solarleuchte nach einem der vorhergehenden Ansprüche, **dadurch gekennzeichnet, dass** der Regler (8) aus den vom Fotovoltaikelement (5) gelieferten elektrischen Strömen und Spannungen aktuelle Umgebungshelligkeitswerte errechnet.
